# EUROPEAN PATENT SPECIFICATION

(11) **EP 2 482 589 B1**
(45) Date of publication and mention of the grant of the patent: **13.02.2019**
(21) Application number: 12002856.8
(22) Date of filing: 03.12.2008
(51) Int. Cl.: H04W 40/24, H04L 12/18, H04L 12/701, H04L 12/721, H04L 12/751, H04L 12/761, H04W 84/18

(54) **Method and system for flooding and multicast routing in an AD-HOC network**
Vorrichtung und Verfahren zum Fluten und Multicast-Routen in einem Ad-hoc Netzwerk
Procédé et système d'écoulement et de routage multidiffusion dans un réseau ad-hoc

(30) Priority: 03.12.2007 IL 18786107
(43) Date of publication of application: 01.08.2012
(62) Divisional of application: 08170614.5
(73) Proprietor: Elbit Systems Ltd., 31053 Haifa (IL)
(72) Inventor: Temelman, Aviv, Moshav Tsofit 44925 (IL); Kodel, Oleg, Ashdod 77452 (IL)
(74) Representative: Schuhmann, Albrecht

(56) References cited:
- WO-A2-2007/122620
- US-A1- 2005 180 447
- US-B1- 6 791 949
- SUN LIMIN ET AL: "An efficient multicast protocol in mobile ipv6 networks", WIRELESS COMMUNICATIONS AND NETWORKING CONFERENCE, 2004. WCNC. 2004 IE EE ATLANTA, GA, USA 21-25 MARCH 2004, PISCATAWAY, NJ, USA,IEEE, vol. 1, 21 March 2004 (2004-03-21), pages 155-159, XP010708367, ISBN: 978-0-7803-8344-9
- JAIKAEO C ET AL: "Adaptive backbone-based multicast for ad hoc networks", PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol. 5, 28 April 2002 (2002-04-28), pages 3149-3155, XP010590055, ISBN: 9780780374003

## Description

### FIELD OF THE DISCLOSED TECHNIQUE

The disclosed technique relates to networks in general, and to methods and system for multicast transmission, in particular.

### BACKGROUND OF THE DISCLOSED TECHNIQUE

Ad-hoc communications networks are known in the art. An ad-hoc network is a network in which the participants in the network, known as nodes, communicate between each other directly or via other nodes (i.e., a node performs the operation of a router). In ad-hoc networks, Nodes may leave or join the network. Nodes may further be mobile, thus, the topology of the network frequently changes. Consequently, routes, for transmitting messages between nodes, frequently vary.

In a communication network, each node has a unique identification representation associated therewith. This unique identification representation enables each node in the network, to send a message to another node in the network as for example taught in the international publication WO2007/122620 by Temelman et al..

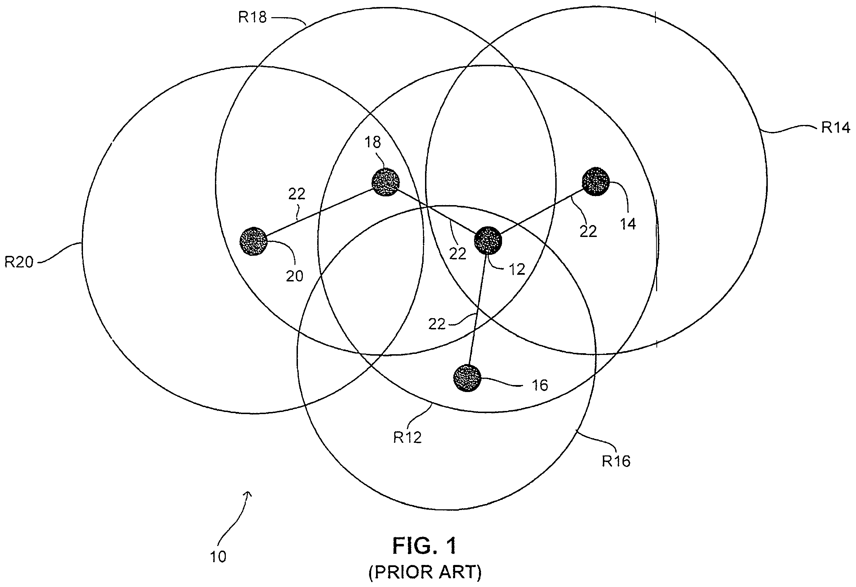

Reference is now made to Figure 1, which is a schematic illustration of a simple exemplary ad-hoc network generally referenced 10 which is known in the art. Network 10 includes nodes 12, 14, 16, 18 and 20. Each node has a maximal transmit range represented by circles R12, R14, R16, R18 and R20. Maximal transmit range may be the maximal radio coverage range of a node. Each of lines 22, between the two nodes, indicates that the nodes communicate with each other. A one-hop neighbor of a node is another node with which the node communicates directly. A two-hop neighbor of a node is another node with which the node communicates via a third node. For example, Nodes 14, 16 and 18 are the one-hop neighbors of node 12, since they communicate directly with node 12. Node 20 is the two-hop neighbor of node 12 since node 20 communicates with node 12 via node 18.

In a communications network, a node may be required to forwards a packet to all of the nodes participating in the network (i.e., broadcast the message to all the nodes in a network wherein not all the nodes communicate directly with each other). The term "packet" refers hereinafter to a packet information transit through the network. A packet, destined to all of the nodes in the network, will be referred to hereinafter as a flood message. For example, with reference to Figure 1, node 14 is the source of a flood packet. Node 14 forwards the packet to node 12. Node 12 forwards the message to nodes 16 and 18 and node 18 forwards the packet to node 20.

In a communications network, a multiplicity of nodes may form a multicast group. A multicast group is a group of nodes, receiving packet associated only with that group. Each multicast group has a unique identification representation associated therewith. This unique multicast identification representation enables a node in the network, to send a packet or packets, destine to other nodes, which are members of that multicast group. A packet, destined to a multicast group, will be referred to hereinafter as multicast packet. For example, with reference to Figure 1, nodes 20, 16 and 14 form a multicast group. Node 18, requires to transmit a multicast packet to all the nodes in the multicast group (i.e., node 16, node 14 and node 20). Therefore node 18 forwards the multicast message to node 20 and node 12. Node 12 forwards the message to node 14 and node 16. It is noted that, as the above example illustrates, that a node that is not a member of a multicast group may send a message to the multicast group.

European patent application publication EP1,324,532A2 to Liu et al., entitled "Method and Apparatus for on Demand Multicast and Unicast" is directed to a technique wherein nodes, in a communications network are arrange in clusters. A node, in a cluster, is selected as a cluster head. The cluster head selects another cluster head as gateway. Each node in the network transmits a beacon status message to one-hop neighbors. These beacon status messages include a unique identification code of the transmitting node, the one-hop neighbors of the node and the multicast groups the node wishes to join. Consequently, each node maintains a local database of one-hop neighbors and of two-hop neighbors. A cluster head stores a cluster head routing table and a gateway stores a gateway routing table.

A message source node may determine the next hop in a route of a message whose destination is a node, at most two-hop from the node, according to the local database. If a node in a cluster cannot locate a destination node, the node forwards the message to the cluster-head. A cluster head attempts to locate the destination node in the local database of the cluster head. If the destination node is not in the local database of the cluster head the cluster head attempts to locate the destination node in a routing table stored in the cluster head. If the destination node is not in the routing table stored in the cluster head routing table, the cluster head forwards the message to a cluster head neighbor one-hop closer to the selected gateway. If eventually the message reaches the gateway and the gateway cannot find the destination node in the gateway routing table, the gateway attempts to discover a route to the destination node.

In the patent to Liu et al., transmitting a multicast message from a singly message source to a multiplicity of destinations is achieved by flooding the network with a controlled flood message. A controlled flood message a message that is flooded only by nodes that can potentially transmit the message to nodes that did not receive the message from another node. The decision of a node to re-transmit a flood message is based on the topology information stored in the node.

The publication to Jaikaeo et al, entitled "Adaptive Backbone-Based Multicast for Ad Hoc Networks", directs to an adaptive multicast mechanism for ad hoc networks. The multicast mechanism, adopts a two-tier architecture, with an adaptive backbone infrastructure. Each node, once deployed, sets itself as a core (or backbone) node and broadcasts hello messages. Thus each node discovers the neighbors thereof and updates the neighbors table stored therein. Initially, each node sets itself as a core node. Each node decides whether it should remain a core node, or become a child of an existing cored node, according to a metric, dubbed *height,* such as power, link failure frequency or connectivity. The node with the highest *height* remains the core node of all the neighbors thereof. The other nodes select the node with the highest *height* as their parent node. Each core node constructs a core forwarding table with entries of nodes who can deliver a message to other core nodes.

In the publication to Jaikaeo et al, each node receives multicast packets from core nodes or multicast forwarders that forward a multicast message from and toward the core. A core node transmits the multicast message to all the other core nodes in the network. The core nodes forward the multicast packet to the multicast members.

U.S. patent 6,791,949, to Ryu et al, entitled "Network Protocol for Wireless Ad Hoc Networks", directs to a wireless ad hoc network wherein each node in the network is associated with a category or state. Backbone nodes are designated "black nodes". Nodes that are not part of the backbone but can communicate directly with one or more black nodes are labeled "green nodes". "White nodes" are nodes that can transmit and receive packets but do not reliably communicate with a black node. The network backbone represents a packet forwarding infrastructure, for exchange of packets between non-neighboring nodes. Each node periodically transmits a signaling packet including a protocol support records such as transmitter status record. The transmitter status record includes the number of black neighbor nodes, the number of non-black neighbor nodes and next hop information record. Network backbone creation begins with a SELECTION process which is performed only by white nodes. The SELECTION process identifies an initial set of network backbone nodes. Once a white node communicates with a backbone node it becomes a green node. An EXPANSION process is also performed by category white nodes. EXPANSION is the process by which a white node 'asks' a green neighbor to become a network backbone node. This will cause the category white node to become category green, since it now has a category black neighbor. Collectively, the SELECTION and EXPANSION processes, result in a network consisting of green and black nodes with varying degrees of backbone connectivity.

Each of the category black node maintains a multicast routing table consisting of a group address and a list of local group members. Each local group member is a direct neighbor of the black node and has joined the group or the closest upstream black node. Each category black node further maintains a list of downstream black nodes. A node, joining a new multicast group, sends a join request to a one-hop black node neighbor. The receiving black node registers the transmitting nodes as a multicast group member. The one-hop black node neighbor transmits the join request to all the black nodes. Thus, the forwarding black nodes become up stream nodes of the receiving black node. When another node request to join the multicast group, that node transmits a request to a one-hop hop black neighbor. The one-hop black neighbor transmits the request only to the up stream one-hop neighbor. Thus, the black node, receiving the request, becomes a down stream one-hop black neighbor of the transmitting black node. A black node with both up stream and down stream black neighbors, does not forward multicast join requests. Thus a multicast tree is established. Multicast packets are forwarded according to the pertinent tree.

### SUMMARY OF THE PRESENT DISCLOSED TECHNIQUE

It is an object of the disclosed technique to provide a novel method for a node in a wireless network for synchronizing stored multicast information among super-nodes as defined in claim 1. In accordance with the disclosed technique, there is thus provided a wireless ad-hoc multicast network. The wireless ad-hoc multicast network includes a plurality of nodes. Each of the nodes is designated with a dynamically determined role. A plurality of the nodes are designated with the role of super-node and the remaining nodes are designated with the role of ordinary-node. The super-node designated nodes form a routing backbone of the network. The nodes form one or more multicast groups. Each of the nodes includes a transmitter, a receiver, a local topology processor, a network topology processor, a backbone multicast processor and a local multicast processor.

The local topology processor is coupled with the transmitter and with the receiver. The network topology processor is coupled with the transmitter, the receiver and with the local topology processor. The backbone multicast processor is coupled with the transmitter, the receiver and with the network topology processor. The local multicast processor is coupled with the transmitter, the receiver, the backbone multicast processor and with the local topology processor.

The transmitter transmits packets and messages over a wireless medium. The receiver receives packets and messages over the wireless medium. The local topology processor maintains a local topology database, and dynamically determines the role of the node. The network topology processor is operative when the role of the node is designated with the role of super-node. The network topology processor maintains a network topology database, and establishes and terminates a dedicated backbone routing link with one-hop super-node neighbors. The backbone multicast processor is operative when the node is designated with the role of super-node. The backbone multicast processor maintains a backbone multicast registration table, transmits backbone multicast update messages and forwards multicast packets. The local multicast processor maintains a local multicast registration table, and transmits local multicast update messages to each one-hop ordinary-node neighbor only when the node is designated with the role of super-node.

The local multicast processor further transmits a multicast group subscription message to a selected one-hop super-node neighbor, when the node is designated with the role of ordinary-node, and forwards a multicast packet to a one-hop super-node neighbor, serving one of the multicast groups associated with the multicast packet. Each of the nodes attempts to communicate with a minimal number of one-hop super-node neighbors.

The nodes form one or more multicast groups. Each of the nodes stores multicast information. The method includes the procedures of detecting an event in the one-hop neighborhood of a super-node designated node, transmitting a local multicast update message, determining if the subscribing subscriber is the first subscriber with the super-node designated node to one of the multicast groups. The method further includes the procedures of determining if the un-subscribing subscriber is the last remaining subscriber to one of the multicast groups, and updating a backbone multicast registration table.

The detected event is either an ordinary-node designated node joining the one-hop neighborhood, an ordinary-node designated node leaving the one-hop neighborhood, a subscriber subscribing with the super-node designated node to one of the multicast groups, or a subscriber un-subscribing with the super-node designated node to either the same one or another one of the multicast groups. The local multicast update message is transmitted when the event is detected as an ordinary-node designated node joining the one-hop neighborhood or the super-node designated node. The subscriber is detected as the first subscriber with the super-node designated node to one of the multicast groups, when the event is detected as the subscriber subscribing with the multicast group. The un-subscribing subscriber is determined as the last remaining subscriber to one of the multicast groups, when the event is detected as the subscriber un-subscribing to either the same or another one of the multicast groups. The backbone multicast registration table is updated when the subscriber is either the last subscriber or the first subscriber, with the super-node designated node, to the multicast group

The method includes the procedures of determining a multicast group for subscription, detecting a one-hop super-node designated node neighbor, of the ordinary-node, serving the determined multicast group, and detecting the one-hop super-node designated node neighbors, of the ordinary-node. The method further includes the procedures of selecting one or more of the detected one-hop super-node designated node neighbors for multicast subscription, and transmitting a multicast subscription request message to the selected super-node designated node neighbor. The one-hop super-node designated node neighbors, of the ordinary-node is detected when a one-hop super-node designated node neighbor, serving the determined multicast group, is not detected.

The method includes the procedures of receiving a flood packet or a flood message, producing a transmission list, producing an updated trailer list and transmitting the flood packet or the flood message to the one-hop super-node neighbors listed in the transmission list. The received flood packet or flood message includes a received trailer list. The transmitted flood packet or flood message includes the updated trailer list.

### BRIEF DESCRIPTION OF THE DRAWINGS

The disclosed technique will be understood and appreciated more fully from the following detailed description taken in conjunction with the drawings in which:
Figure 1, which is a schematic illustration of a simple exemplary ad-hoc network generally referenced 10 which is known in the art;
Figures 2A, 2B, 2C and 2D which are a schematic illustration of an exemplary network generally referenced 100, in accordance with an embodiment of the disclosed technique;
Figure 3, which is a schematic illustration of a system, generally referenced 160, constructed and operative in accordance with another embodiment of the disclosed technique;
Figure 4, which is a schematic illustration of a method for operating a node in a wireless and cluster-less network, operative in accordance with a further embodiment of the disclosed technique;
Figure 5, which is a schematic illustration of a method for updating the backbone multicast table, by a super-node, when an event in the one hop neighborhood of that super-node occurs, in accordance with another embodiment of the disclosed technique;
Figure 6, which is a schematic illustration of a method for prioritizing and selecting a super-node when an ordinary-node attempts to subscribe to a multicast group, operative in accordance with a further embodiment of the disclosed technique;
Figures 7A, 7B and 7C which are schematic illustrations of an exemplary network backbone, generally referenced 320, in accordance with another embodiment of the disclosed technique; and
Figure 8, which is a schematic illustration of a method for determining the next hops of a flood packet in the backbone of the network, according to a further embodiment of the disclosed technique.

### DETAILED DESCRIPTION OF THE EMBODIMENTS

The disclosed technique overcomes the disadvantages of the prior art by providing a cluster-less communication network and a method and a system therefore, which enables multicast transmission between mobile nodes. In the network according to the disclosed technique some nodes, designated as super-nodes, form the routing backbone of the network and communicate between one another via a dedicated backbone routing link.

In a communication system according to the disclosed technique, each node in the network is a router (i.e., a node is capable of forwarding packets of information toward the destination of that packet). Each node may be coupled directly with one or more hosts. Each node may further be coupled with external routers (i.e., routers associated with external networks). These external routers provide routing services to the external networks. Each node provides routing services to hosts coupled directly to the node, or to the external routers coupled therewith. Each node transmits a node status message, which is received by one-hop neighbors of the node. Node status messages will be referred to hereinafter as "hello messages". A hello message includes the identification representation (e.g., MAC ID number) of the transmitting node, the role of the node (i.e., ordinary-node or super-node), and a list of the one-hop neighbors of the transmitting node and the role of each of these one-hop neighbors. Accordingly, each node receives hello messages from one-hop neighbors and these hello messages contain information relating to the two-hop neighbors of the receiving node (i.e., nodes which can be wirelessly accessed via the one-hop neighbor nodes). Consequently, a node acquires information about the identification and role of one-hop neighbors and two-hop neighbors thereof, and forms a local topology database based on that information. It is noted that the term message or messages refers to messages containing information relating to the construction and maintenance of the network. These messages are transmitted between nodes. It is further noted that the term "packet" herein refers to packets of information transit through the network. These packets are forwarded between nodes participating in the network.

Each ordinary-node (i.e., a node that is not a super node) forms a two-hop local routing table. This local routing table includes information relating to every node, which is no more than two-hops away (i.e., one-hop neighbors and two-hop neighbors). The local routing table includes entries of the one-hop neighbors and of the hosts, and external routers coupling external networks, coupled with the one-hop neighbor, to which packets are forwarded. Information associated with the routing table entries may include the unique network identification representation (e.g., IP address) assigned to each node, to each host or to each external router coupling an external network. The local routing table further includes entries of the two-hop neighbors, with the respective one-hop neighbors (i.e., there may be more than one one-hop neighbor which can relay packets from a specific source node to a specific destination node), and their unique routing identification representations. It is noted that the local routing table may further include entries of hosts and of routers coupling external networks, coupled with a two-hop neighbor. The routing identification representations, of the nodes in the local routing table, are derived from the hello messages sent by each node. The routing identification representations are derived from the node identification representation since there is a one-to-one correspondence between them. The routing identification representations of the hosts, coupled with the node, are obtained according to a routing protocol (e.g., RIP).

A super-node is a node with capabilities to direct packets to every node in the network, or hosts couple with the node (i.e., directly or via an external router coupling an external network). A super-node, stores a local routing table, including entries of the one-hop and two-hop neighbors (i.e. entries to one-hop and two-hop ordinary-node neighbors, one-hop and two-hop super-node neighbors, and hosts and routers coupling external networks, coupled with one-hop neighbors). Each entry includes information of the unique network identification representation assigned to each node, to each host, or to each external router of an external network coupled with the one-hop ordinary-node neighbor. A super-node, further stores a network routing table. This network routing table includes entries to all the nodes, the hosts and external networks, with the respective one-hop super-node neighbor or neighbors, to which the super-node forwards a packet destined to these nodes, hosts, or networks. Each entry includes information of the unique routing identification representation.

Each two super-nodes communicate between one another via a dedicated backbone routing link. A recently promoted super-node establishes a dedicated backbone routing link (e.g., by a Point to Point Protocol) with each of the one-hop super-node neighbors thereof. A new super-node request, and receives, from a selected one hop super-node neighbor, the topology information of the network, stored in that selected one-hop super-node neighbor. Thus, each super-node creates a network topology database, according to the network topology information. Super-nodes may exchange network topology information according to a link state protocol (e.g., OSPF). Super-nodes synchronize their network topology databases, and maintain this synchronization by exchanging network topology update messages, with other one-hop super-node neighbors. These network topology update messages inform of changes in the topology of the one-hop neighborhood of the super-node from which this message originated (e.g., an ordinary-node left the one-hop neighborhood of the super-node). It is noted that a super-node may exchange network topology update messages not originated there from. Thus, network topology update information propagates (i.e., flooded) through the super-node backbone, and the super-nodes maintain their network topology databases synchronized. Each super-node constructs and maintains a network routing table according to the network topology database.

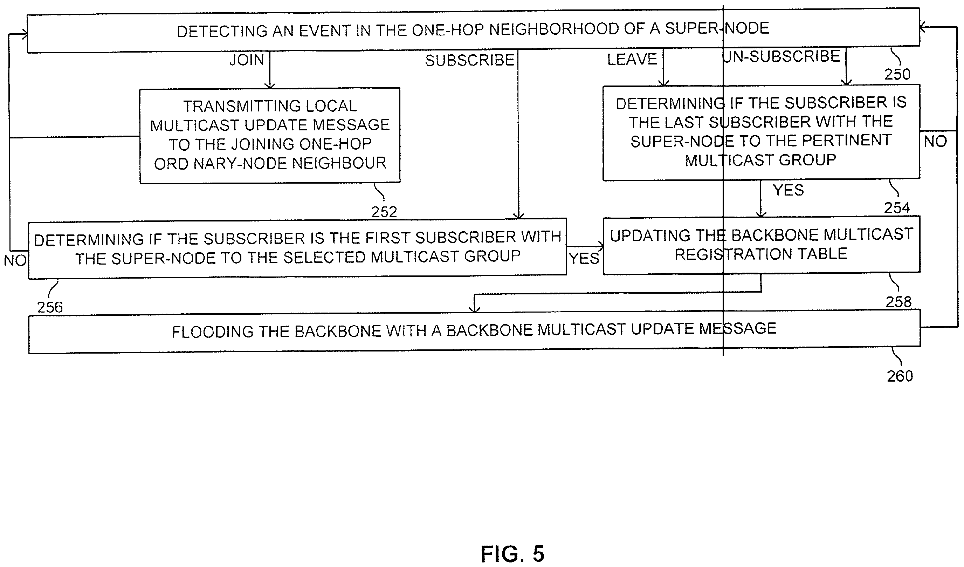

According to the disclosed technique, an ordinary-node attempts to have at least a minimal local one-hop super-node number (i.e., a minimum number of one-hop super-node neighbors). A super-node attempt to have at least a minimal one-hop backbone super-node number (i.e. a minimum number of one-hop super-node neighbors). An ordinary-node in the network may change the own role of thereof, or designate other one-hop ordinary-node neighbors as super-nodes. A Super-node is designated according to a static criterion (e.g., node ID number) or a dynamic criterion (e.g., weighted connectivity or coverage) or a combination thereof and that combination can either be weighted or not weighted. An ordinary-node, changes its role to a super-node, if the ordinary-node is an articulation node. An articulation node will be further explained in conjunction with Figures 5. A super-node, changes its role to an ordinary-node, if the super-node exhibits self-redundancy.

According to the disclosed technique, each node (i.e., ordinary-node or super-node) is a router providing multicast services to hosts which are coupled with that node (i.e., either directly or via an external router). Each node may register to a multicast group, thereby becoming a member of that multicast group. Each registered node may provide multicast services (e.g., forwarding a multicast packet to the destinations of that packet) to the members of the multicast group. Each multicast group has a unique network identification representation (e.g., IP multicast address) associated therewith. Additionally, each multicast group has a multicast identification representation associated therewith (e.g., MAC multicast address). A host, coupled with a node, receives multicast services from that node. An ordinary-node receives multicast services from one-hop super-node neighbors thereof.

Each node in the network (i.e., a super-node or an ordinary-node) maintains a local multicast registration table. This local multicast registration table includes a list of all the multicast groups in the network and which of these multicast groups, the node serves. The Local multicast table further includes the members of each of those multicast groups, registered with the node (i.e., hosts coupled with the node when the node is an ordinary-node, and hosts and one-hop ordinary-nodes neighbors when the node is a super-node).

Each super-node (i.e., even when that super-node is not a member of a multicast group), further maintains a backbone multicast registration table. This backbone multicast registration table includes all the multicast groups in the network, and with which of these multicast groups each of the super-nodes in the network (i.e., including itself) is registered.

Each super-node floods the backbone of the network with messages including the multicast groups that that super-node serves. Alternatively, a super-node may floods the backbone of the network with messages including the new multicast groups (i.e., if such exist) that that super-node serves. These messages will be referred to herein as backbone multicast update messages. The term "event", refers herein to an ordinary node joining or leaving the one-hop neighborhood of a super-node, or to an ordinary-node, or a host, subscribing or un-subscribing to or from a multicast group. Consequent to the backbone multicast update messages, super-nodes synchronize their respective backbone multicast registration tables.

A super-node, floods backbone multicast update messages when an event, or several aggregated events, occur in the one-hop neighborhood of the super-node. A super-node may further flood backbone multicast update messages periodically (i.e., the backbone multicast update message may include the same information relative to the previous flooded message). The backbone multicast update messages, may be appended to a network topology update message, thus reducing the bandwidth, or alternatively, the number of packets transmitted every second (i.e., packets per second), required to transmit these updates. Additionally, each super-node transmits to another super-node, joining the one-hop neighborhood of the super-node, the backbone multicast registration table thereof, over the dedicated backbone routing link.

Each super-node transmits to the one-hop ordinary-node neighbors thereof, messages including a list of all the multicast groups in the network, and which multicast group this super-node serves. These messages will be referred to herein as local multicast update messages. A super-node transmits these local multicast update messages periodically. A super-node further transmits these local multicast update messages when an event, or several aggregated events occur in the one-hop neighborhood of the super-node. An ordinary-node updates the local multicast table thereof, according to the received local multicast update messages.

An ordinary-node, attempting to subscribe to a specific multicast group (e.g., a host couple with the ordinary-node subscribes to that specific multicast group), transmits a subscription request message to a selected one-hop super-node or super-nodes neighbors (i.e., there can be more than one super-node serving each multicast group in the one-hop neighborhood of the ordinary-node). The respective super-node adds the transmitting ordinary-node to the local multicast registration table thereof, and transmits a local and backbone multicast update messages. Henceforth, the super-node or the super-nodes forward multicast packets, to and from the ordinary-node, until the ordinary-node leaves the one-hop neighborhood of the super-node or un-subscribes to the multicast group.

Each super-node in the network (i.e., even if that super-node is not a member of a multicast group) maintains a minimal spanning tree, of the backbone of the network, for each multicast group in the network. The minimal spanning trees are constructed according to the backbone multicast table and the network topology database stored in each super-node. This minimal spanning tree may be, for example a, shared coreless minimal spanning tree or a source based minimal spanning tree. This minimal spanning tree should include all of the super-nodes, which serve the respective multicast group. It is noted, that when the tree is a shared coreless minimal spanning tree, each super-node should maintain the exact same tree for each multicast group, since the backbone multicast tables and the network topology database of all the super-nodes are synchronized.

Each super-node, determines the next hop or hops of a multicast packet (i.e., forwards the multicast packet), associated with a multicast group) according to the minimal spanning tree associated with that same multicast group (i.e., either during or prior to forwarding a multicast message or a multicast packet). However a super-node, not registered with that multicast group, may be required to forward a packet to the multicast group (i.e., the super-node does not receive multicast messages). In case the super-node uses shared coreless minimal spanning tree, the super-node determines the shortest path toward another super-node which is a member of that tree. In case the super-node uses a source based minimum spanning tree, the super-node determines the source based minimum spanning thereof and forwards the packet accordingly.

An ordinary-node forwards a multicast packet to a selected one-hop super-node neighbor that provides multicast routing services to that ordinary-node. The super-node forwards the multicast packet according to the minimal spanning tree, stored therein. Since the minimal spanning tree is a part of a multicast backbone consisting of all the minimal spanning trees, super-nodes may transmit the multicast packet between the super-nodes of the pertinent tree.

A super-node, required to forward a multicast packet to a one-hop ordinary node neighbor, transmits the multicast packet to that one-hop ordinary-node neighbor. The multicast packet includes the unique multicast identification representation associated with the multicast group. An ordinary-node, which is not a member the pertinent multicast group, ignores the multicast packet. An ordinary-node, which is a member of the pertinent multicast group, forwards that multicast packet to the pertinent host (i.e., the host registered with the pertinent multicast group) or router of external network coupled therewith.

As mentioned above, super-nodes flood the backbone of the network with network topology update messages and with messages including backbone multicast update messages. Furthermore, each node (i.e., ordinary-node or super-node) is capable of flooding the network with a packet (i.e., that packet is directed to be received by every node in the network). An ordinary-node transmits the flood packet to a one-hop super-node neighbor. That one-hop super-node neighbor forwards the flood packet to all, or part of the one-hop super-node neighbors thereof. Those one-hop super-node neighbors (i.e., the neighbors of the super-node that first received the flood message or flood packet form an ordinary-node), forward the flood packet to all, or part of their one-hop super-node neighbors. Each super-node forwards the flood packet to the one-hop ordinary-node neighbors thereof.

A node aggregates flood packets prior to transmitting those flood packets. Each flood packet includes a reliability indicator and an urgency indicator. The urgency indicator relates to the time period the node waits, and to the number of flood packets the node aggregates, prior to forwarding that flood packet. When the flood packet is of high urgency, the node does not aggregate other flood packets, and transmits the flood packet immediately. The reliability indicator relates to the number of time the flood packet is to be re-transmitted, to ensure that every node in the network receives that flood packet.

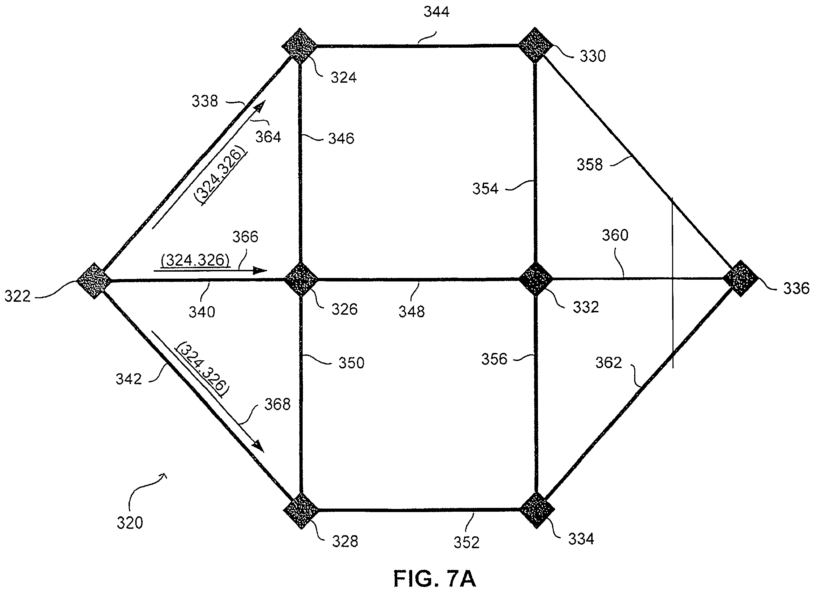

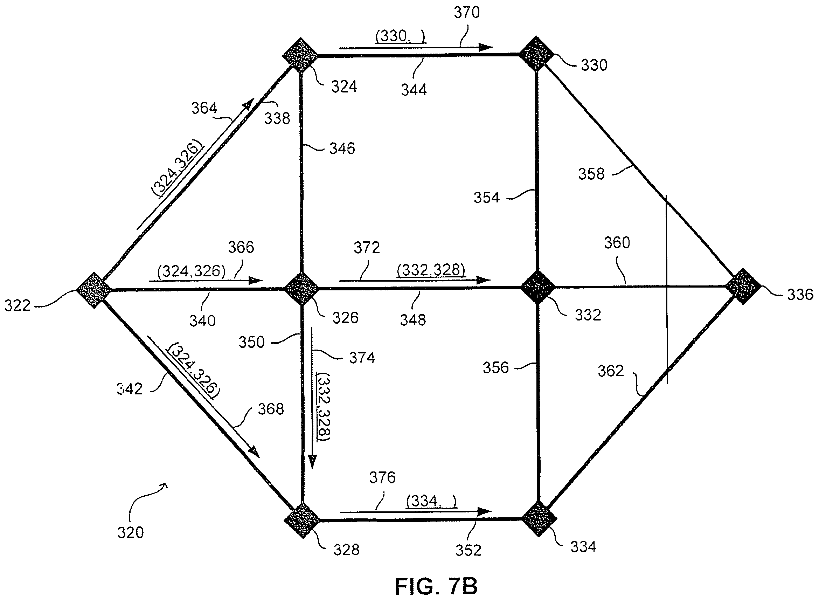

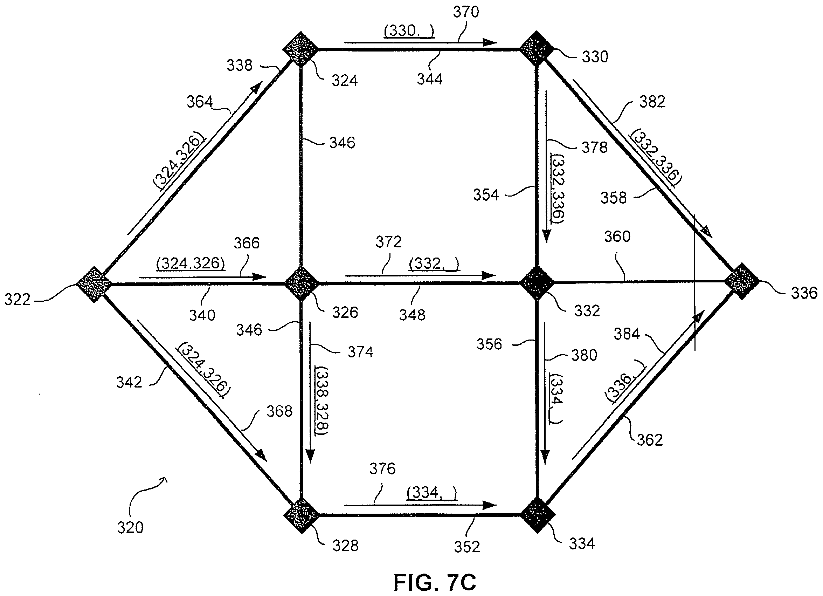

When a message or a packet is flooded through the network, each node may receive that message or packet a multiplicity of times (i.e., there may be a redundancy of flood packet or flood message transmission). Therefore, in order to control that redundancy and reduce the bandwidth required to transmit flood messages or flood packets, each flood message or flood packet includes a trailer list. This trailer list includes entries of the identification representations of at least some of the super-nodes that received the flood message or flood packet. The trailer list may be managed, for example, as a First-In-First-Out (FIFO) buffer (i.e., a buffer wherein the entry which was the first to enter the buffer, is also the first to exit, when the buffer overspills). The trailer list may further be managed as a finite length list, wherein entries in the list are deleted according to dynamic considerations (e.g., work load of a super-node). A super-node, receiving a flood packet, produces an updated trailer list, prior to forwarding that flood packet, which is further explained in conjunction with Figure 7A, 7B and 7C.

A super-node forwards the flood packet, according to a transmission list. This transmission list includes only to those one-hop super-node neighbors not listed in the received trailer list, and excludes the receiving super-node. This transmission list further includes those one-hop super-node neighbors, to which the super-node intends to transmit the message. Additional to the trailer list, a flood packet includes the identification of originating source node (i.e., the first node that sent the message) and a packet unique identifier (e.g., packet serial number). Accordingly, a node, receiving a flood packet, can identify if it has previously received that flood packet (i.e., within a configurable time period). The probability that a node shall receive a certain flood message more than once is counter-proportional (i.e., not necessarily linearly counter-proportional) to the length of the trailer list and the length of the transmission list.

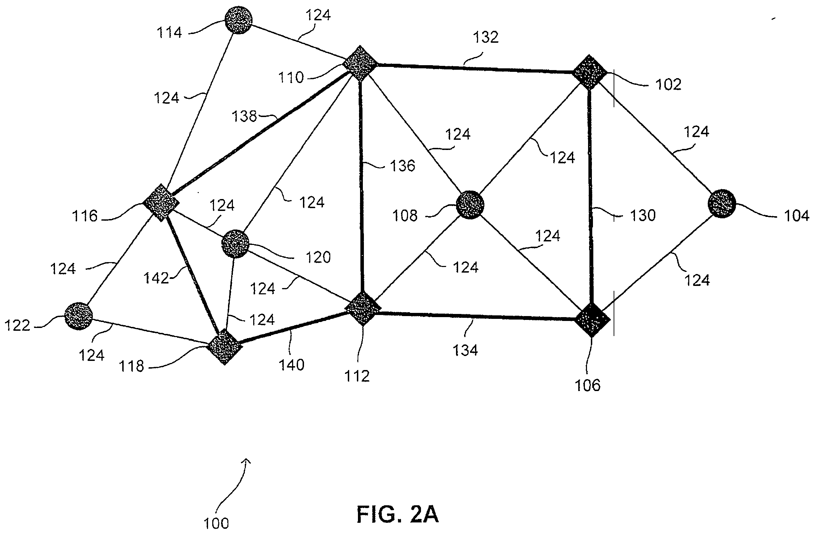

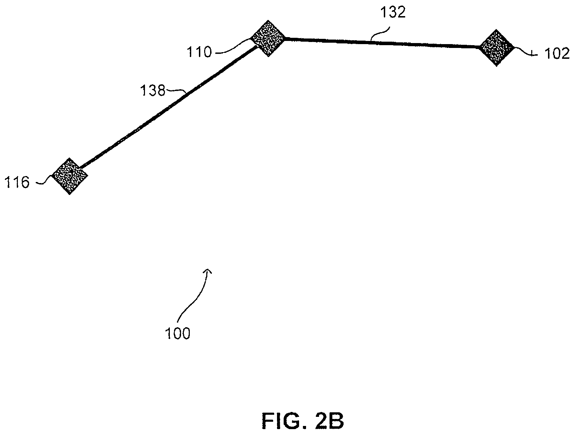

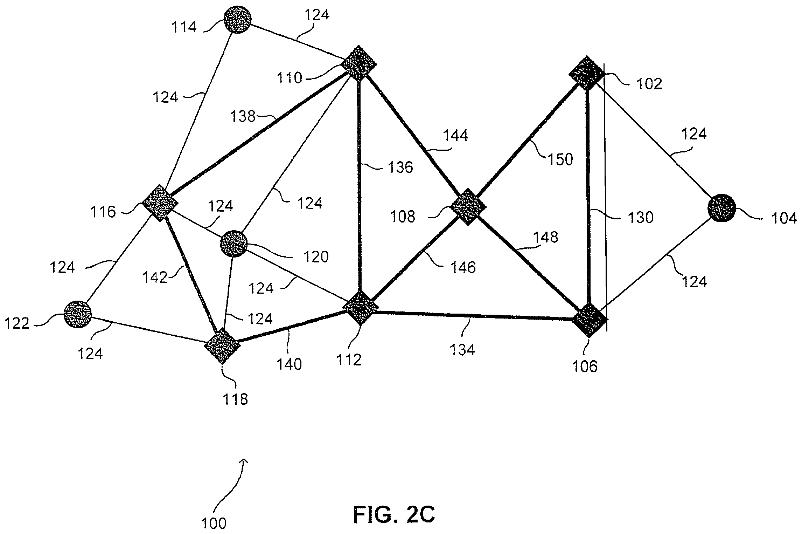

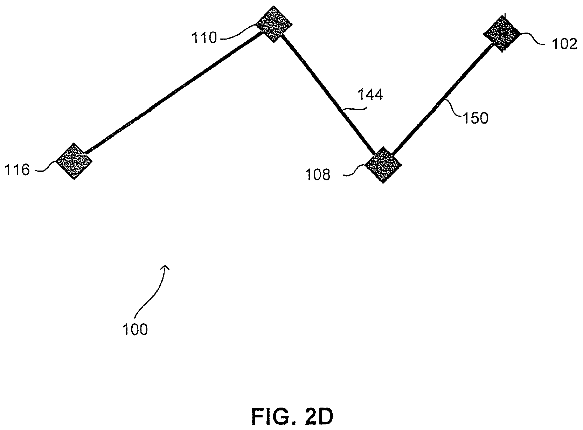

Reference is now made to Figures 2A, 2B, 2C and 2D which are schematic illustrations of an exemplary network generally referenced 100, in accordance with an embodiment of the disclosed technique. Network 100 includes super-nodes 102, 106, 110, 112, 116 and 118 and ordinary-nodes 104, 108, 114, 120, and 122. Super-nodes 102, 106, 110, 112, 116 and 118 form the backbone of the network. In network 100, the minimal local one-hop super-node number and the minimal one-hop backbone super-node number are both equal to two. Hosts (not shown) are coupled with each super-node and with each ordinary-node. These hosts are coupled either directly of via an external router of an external network. Each of the super-nodes and ordinary-nodes in Figures 2A provide multicast services to theses hosts. Each of lines 124 represents a local communication links between ordinary-node and one-hop neighbor of the ordinary-node. Bold line 130 represents dedicated backbone routing links between adjacent super-nodes 102 and 106. Bold line 132 represents a dedicated backbone routing link between super-nodes 102 and 110. Bold line 134 represents a dedicated backbone routing link between super-nodes 106 and 112. Bold line 136 represents a dedicated backbone routing link between super-nodes 110 and 112. Bold line 138 represents a dedicated backbone routing link between super-nodes 110 and 116. Bold line 140 represents a dedicated backbone routing link between super-nodes 112 and 118 and bold line 142 represents a dedicated backbone routing link between super-nodes 116 and 118. In network 100, ordinary-nodes 104, 108, 120 and 122, and super-node 110 are members of the same multicast group.

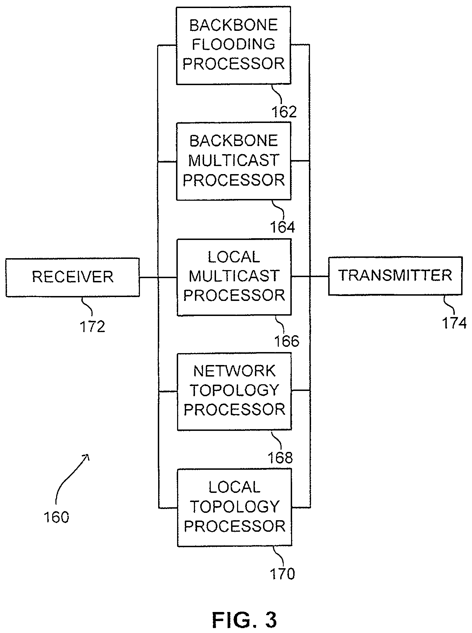

Reference is now made to Figure 3, which is a schematic illustration of a system, generally referenced 160, constructed and operative in accordance with another embodiment of the disclosed technique. System 160 includes backbone flooding processor 162, backbone multicast processor 164, local multicast processor 166, network topology processor 168, local topology processor 170, receiver 172 and transmitter 174.

Local multicast processor 166 is coupled with backbone flooding processor 162, with backbone multicast processor 164, with network topology processor 168, with local topology processor 170, with receiver 172 and with transmitter 174. Backbone flooding processor 162 is further coupled with backbone multicast processor 164, with network topology processor 168, with local topology processor 170, with receiver 172 and with transmitter 174. Backbone multicast processor 164 is further coupled with network topology processor 168, with local topology processor 170, with receiver 172 and with transmitter 174. Network topology processor 168 is further coupled with local topology processor 170, with receiver 172 and with transmitter 174 and local topology processor 170 is further coupled with receiver 172 and with transmitter 174

Backbone flooding processor 162 is operative to detect the one-hop super-node neighbors, from which a flood message or a flood packet is received. Backbone flooding processor 162 determines the one-hop super-node neighbors to which the flood message or flood packet is transmitted, and appends a list of the one-hop super-node neighbors to which the flood message or flood packet is transmitted, to the flood message or flood packet. Backbone flooding processor 162 aggregates flood messages and flood packets, according to the urgency indicator of the flood message, and transmit flood message or flood packets via transmitter 174, at least once, according to the reliability indicator.

Backbone multicast processor 164, is operative to maintain the backbone multicast registration table when the node is a super-node and to transmit backbone multicast update messages via transmitter 174. Backbone multicast processor 164, further determines and maintains a minimum spanning tree, for each multicast group in the network and forwards a multicast packet according to the determined minimum spanning tree.

Local multicast processor 166 maintains a local multicast registration table, and transmits local multicast update messages via transmitter 174. Local multicast processor further transmits via transmitter 174 a multicast group subscription message and forwards a multicast packet to a pertinent one-hop super-node neighbor.

Network topology processor 168 is operative when the node is a super-node. Network topology processor 168, maintains the network topology database, and establishes and terminates dedicated backbone routing links. Network topology processor 168 provides transmitter 160 with network topology database requests, with network topology update message and with network topology database, when a network topology database request is received, and with the local topology database when the node changes its role to a super-node. Network topology processor 168 further provides the network topology database to routing processor 156.

Local topology processor 170 is operative when the node is a super-node and when the node is an ordinary-node. Local topology processor 170 maintains the local topology database of the node and determines if a changes the role of the node (i.e., from ordinary-node to super-node or vice versa), or if a change in the role of a one-hop ordinary-node neighbor is necessary, and establishes and terminates dedicated backbone routing links. When the role of the node changes to super-node, local topology processor 170 provides the local topology database to network topology processor 168, to backbone multicast processor 164 and to local multicast processor 166. Local topology processor 168 further provides transmitter 174 with periodic hello messages and with super-node compel messages (i.e., message that cause a change in the role of a one-hop ordinary-node neighbor).

Receiver 172 provides received hello messages to local topology processor 170. Receiver 172 further provides received local multicast update messages (i.e., received from one-hop super-node neighbors) to local multicast processor 166, and provides received backbone multicast update messages to backbone multicast processor 164. Receiver 172 further provides received flood messages to backbone flooding processor 162.

In the system according to the disclosed technique, each node (i.e., a super-node or an ordinary-node) may join or leave the network. Each node may further move to another location, thereby changing its physical position, relative to other nodes. Consequently, the role of each node may change. Therefore, the topology of the network dynamically changes.

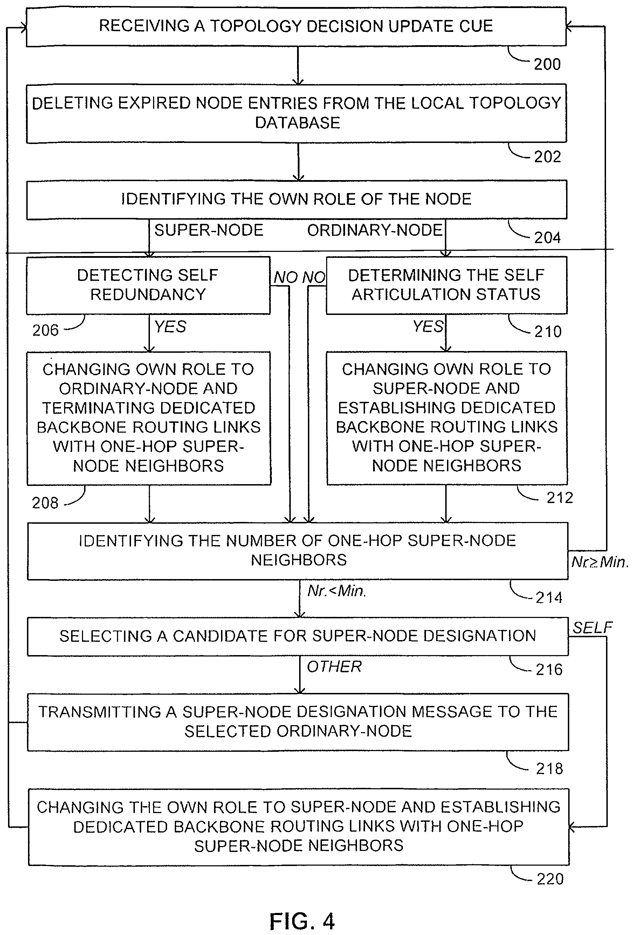

Reference is now made to Figure 4, which is a schematic illustration of a method for operating a node in a wireless and cluster-less network, operative in accordance with a further embodiment of the disclosed technique. In Figure 4, "Nr." denotes the number of super-node neighbors, "≥" denotes "at least" and "<" denotes "smaller than", *X*₁ denotes the minimal one-hop local super-node number and *X*₂ denotes the minimal one-hop backbone super-node number. Further in Figure 4, the term "*Min.*" refers to either *X*₁ or *X*₂, according the context, the term "self" refers the node executing the method and the term "other" refers to nodes other than the node executing the method.

In procedure 200, a topology decision update cue is received. This topology decision update cue may be, for example, a hello messages received from other nodes. The topology decision update cue may also be a received super-node designation message. The topology decision update cue may further be an internal flag raised every configurable time period. This configurable time period may be predetermined. Alternatively, the configurable time period may further be dynamically determined according to the number of one-hop node neighbors of the node. With reference to Figure 3, local topology processor 170 awaits a topology update decision cue.

In Procedure 202, the local topology database of the receiving node is updated according to the received hello message. With reference to Figure 3, local topology processor 170 updates the local topology database. After the completion of procedure 202, the method proceeds to procedure 204. When the node is an ordinary-node, the method further proceeds to procedure 210

In procedure 202, expired node entries are deleted from the local topology database. Node entries are rendered expired, when a hello message has not been received there from, during a predetermined interval. With reference to Figure 3, local topology processor 170 deletes expired node entries.

In procedure 204, the own role of the node is identified. When the node is a super-node, then, the method proceeds to procedure 206. When the node is an ordinary-node, then, the method proceeds to procedure 210. With reference to Figure 3, local topology processor 170 identifies the role of the node.

In procedure 206, the self redundancy of the receiving node is detects. The system according to the disclosed technique, aims to minimize the number of super-nodes, taking into account certain networking constraints (e.g., robustness). Therefore, each super-node tries to identify self-redundancy. A super-node is considered redundant if all of the following occurs:
- the minimal one-hop backbone super-node number, *X*₂, is still met, if that potentially redundant super-node was demoted to an ordinary-node, for all of the one-hop super-node neighbors of the potentially redundant super-node;
- the minimal local super-node neighbor number, *X*₁, is still met, if that potentially redundant super-node was demoted to an ordinary-node, for all of the one-hop ordinary-node neighbors;
- if the role of that super-node changes to ordinary-node, that node will not exhibit an articulation node status.

When self redundancy is detected, then, the method proceeds to procedure 208. When self redundancy is not detected, then, the method returns to procedure 214. With reference to Figure 3, local topology processor 170 detects self-redundancy of the node and changes the role of the receiving node to an ordinary-node when self-redundancy is detected.

In procedure 208, the role of the node is changed to an ordinary-node and dedicated backbone routing links, with one-hop super-node neighbors, are terminated. With reference to Figure 3, local topology processor 170 changes the role of the node to ordinary-node and terminates dedicated backbone routing links with one-hop super-node neighbors. After the completion of procedure 208, the method proceeds to procedures 214.

In procedure 210, self-articulation status is detected. Self articulation status is determined according to either one of the following criteria:
- A node that at least one of the one-hop super-node neighbors thereof, are not vertices of a continuous graph (i.e., communicate with each other according to the local topology database);
- Not all the one-hop ordinary-node neighbors are one-hop away from the continuous graph of super-nodes;

When the self-articulation status of the node is positive, then, the method proceeds to procedure 212. When the self-articulation status of the node is negative, then, the method proceeds to procedure 214. With reference to Figure 3, local topology processor 170 determines the self-articulation status of the node.

In procedure 212, the role of the node is changed to a super-node and dedicated backbone routing links are established with one-hop super-node neighbors. With reference to Figure 3, local topology processor 170 changes the role of the node to super-node and establishes dedicated backbone routing links with one-hop super-node neighbors. After the completion of procedure 212, the method proceeds to procedures 214.

In procedure 214, the number of one-hop super-node neighbors of the current node is identified. Each ordinary-node should have a minimal one-hop local super-node number, *X*₁, of one-hop super-node neighbors. Each super-node should have a minimal one-hop backbone super-node number, *X*₂, of one-hop super-node neighbors. When the number of one-hop super-node neighbors, is at least *X*₁ when the node is an ordinary-node, or at least *X*₂ when the node is a super-node, then, the method returns to procedure 200. When the number of one-hop super-node neighbors is either smaller than *X*₁ when the node is an ordinary-node or smaller than *X*₂ when the node is a super-node, then, the method proceeds to procedure 216. With reference to Figure 3, local topology processor 170 identifies the number of one-hop super-node number of the receiving node and determines if the minimal one-hop local super-node number or the minimal one-hop backbone super-node number is met.

In procedure 216, a candidate for super-node designation, is selected. When the role of the node is a super-node, the node selects a one-hop ordinary-node neighbor for super-node designation. When the role of the node is ordinary-node, the node may select itself for super-node designation as well. Furthermore, when a super-node receives a super-node designation message, from another node, that super-node elects itself for super-node designation. A node (i.e., a super-node or an ordinary-node) may designate it self or another ordinary-node as a super-node according to, a static priority criterion (e.g., identification representation), a dynamic criterion, or a combination thereof. According to the static priority criterion the system selects the node with the highest static priority (e.g., lowest or the highest identification representation). According to the dynamic criteria, the node calculates a certain value for each node. The node designates the node with the highest value as a super-node. For example, the value may be the sum of the weighted connectivity (i.e. the measured power of received transmissions) and the weighted coverage of the node. When the role of the node is ordinary-node and the node selected itself for super-node designation, then, the method proceeds to procedure 220. When the node (i.e., either an ordinary-node or a super-node) selected a one-hop ordinary-node neighbor for super-node designation, the method proceeds to procedure 218. With reference to Figure 3, local topology processor 170 selects an ordinary-node for super-node designation.

In procedure 218, a super-node designation message is transmitted to the selected ordinary-node. With reference to Figure 3, local topology processor 170 transmits via transmitter 174 a super-node designation message to the selected ordinary-node. After the completion of procedure 218, the method returns to procedure 200.

In procedure 220, the role of the node is changed to a super-node and dedicated backbone routing links, with one-hop super-node neighbors, are established. With reference to Figure 3, local topology processor 170 changes the role of the node to super-node and establishes dedicated backbone routing links with one-hop super-node neighbors. After the completion of procedure 220, the method proceeds to procedures 200.

In the network according to the disclosed technique, each super-node maintains a coreless minimal shared spanning tree for each multicast group in the network. This minimal shared spanning tree should include at least all of the super-nodes, which serve the respective multicast group. Reference is now made back to Figure 2A, and to Figures 2B, 2C and 2D, which are a schematic illustration of exemplary network 100. As mentioned above, with reference to Figure 2A, ordinary-nodes 104, 108, 120 and 122 and super-node 110 are all members of the same multicast group. An exemplary minimum spanning tree of this multicast group includes super-nodes 102, 110 and 116 (Figure 2B). However, in Figure 2C, dedicated backbone routing link 132, between super-node 110 and super-node 102 is lost. Consequently, node 108 changed its role to a super-node (i.e., according to the articulation node status criterion, as mentioned above, in conjunction with Figure 4). Line 144 represents the dedicated backbone routing link between super-nodes 108 and 110. Line 146 represents the dedicated backbone routing link between super-nodes 108 and 112. Line 148 represents the dedicated backbone routing link between super-nodes 108 and 106. Line 150 represents the dedicated backbone routing link between super-nodes 108 and 102. According to these changes in the topology of the network, the minimum spanning tree of the multicast group including ordinary-nodes 104, 120 and 122, and super-nodes 108 and 110 changed. Figure 2D illustrates an exemplary minimum spanning tree of this multicast group, after dedicated back routing link 132 (Figure 1A) was lost. This exemplary minimum spanning tree includes super-nodes 102, 108, 110, 116.

As mentioned above, according to the disclosed technique, a super-node floods the backbone with backbone multicast update messages. A super-node transmits these backbone multicast update messages every configurable time period or due to an event in the one-hop neighborhood thereof. These backbone multicast update messages include the multicast groups that that super-node serves and changes that occurred in the backbone multicast registration table.

Reference is now made to Figure 5, which is a schematic illustration of a method for updating the backbone multicast table, by a super-node, when an event in the one hop neighborhood of that super-node occurs, in accordance with another embodiment of the disclosed technique. In procedure 250, an event in the one-hop neighborhood of the super-node is detected. As mentioned above, this event refers to an ordinary node joining or leaving the one-hop neighborhood of a super-node. The event further refers to an ordinary-node, or a host, subscribing or un-subscribing to or from a multicast group, that the super-node serves. When the detected event is an ordinary-node joining the one-hop neighborhood of the super-node, the method proceeds to procedures 252. When the detected event is an one-hop ordinary-node neighbor or a host, coupled with the super-node, subscribing to a multicast group that the super-node serves, then, the method proceeds to procedure 256. When the detected event is a one-hop ordinary-node neighbor leaving the one-hop neighborhood of the super-node, or a one-hop ordinary-node neighbor of the super-node, or a host coupled with the super-node, un-subscribing to a multicast group that the super-node serves, then, the method proceeds to procedure 254. With reference to Figure 3, Local topology processor 168 determines when an ordinary-node joins or leaves the one-hop neighborhood of the super-node. Local multicast processor 166 determines when an ordinary-node or a host coupled with the super-node subscribes or un-subscribes to a multicast group that the super-node serves.

In procedure 252, a local multicast update message is transmitted to the joining one-hop ordinary-node neighbor. This local multicast update message includes a list of all the multicast groups in the network, and which multicast group the super-node serves. With reference to Figure 3, local multicast processor 166 transmits via transmitter 171 a local multicast update message. After procedure 252 the method repeats from procedure 250.

In procedure 254, whether the subscriber is the last subscriber with the super-node to the pertinent multicast group, is determined. The event of an ordinary-node leaving the one-hop neighborhood of the super-node is similar to the ordinary-node un-subscribing to the pertinent multicast groups (i.e., those multicast groups that that ordinary-node is subscribed thereto). When the subscriber is not the last subscriber with the super-node to the pertinent multicast group, then, the method repeats from procedure 250. When the subscriber is the last subscriber with the super-node to the pertinent multicast group, then, the method proceeds to procedure 258. With reference to Figure 3, local multicast processor 166 determines if the subscriber is the last subscriber to the pertinent multicast group.

In procedure 256, whether the subscriber is the first subscriber with the super-node to the selected multicast group, is determined. The subscriber may be a one-hop ordinary-node neighbor requesting to subscribe to a selected multicast group. The subscriber may further be a host, coupled with the super-node, requesting to subscribe to a selected multicast group. When the subscriber is not the first subscriber with the super-node to the selected multicast group, then, the method repeats from procedure 250. When the subscriber is the first subscriber with the super-node to the selected multicast group, then, the method proceeds to procedure 258. With reference to Figure 3, local multicast processor 166 determines if the subscriber is the first subscriber to a selected multicast group.

In procedure 258, the backbone multicast registration table is updated. With reference to Figure 3, backbone multicast processor 164 updates the backbone multicast update table.

In procedure 260, the backbone of the network is flooded with a backbone multicast update message. With reference to Figure 3, backbone multicast processor 164 floods the backbone with a backbone multicast update message via backbone flooding processor 162 and transmitter 174. After procedure 260 the method repeats from procedure 250.

In the network according to the disclosed technique, a super-node may join or leave the one-hop neighborhood of an ordinary-node subscribed to a multicast group that that super-node serves. Consequently, the ordinary-node is required to update the local multicast table, stored in that ordinary-node. When an ordinary-node detects that a super-node is a new one-hop neighbor, the ordinary-node creates an empty entry of the joining super-node in the local multicast registration table stored therein, updates that entry with the local multicast update message received from the joining super-node. When the ordinary-nodes detects that a super-node, serving a pertinent multicast group, is no longer a one-hop neighbor, the ordinary-node deletes the entry associated with that leaving super-node, from the local multicast registration table stored therein . The node attempts to subscribe to the multicast group that the leaving super-node served, via another super-node, serving the same multicast group. An ordinary-node, attempting to subscribe to a multicast group, prioritizes the one-hop super-node neighbors thereof, selects the super-node with the highest priority, and transmits a multicast group subscription request to the selected super-node.

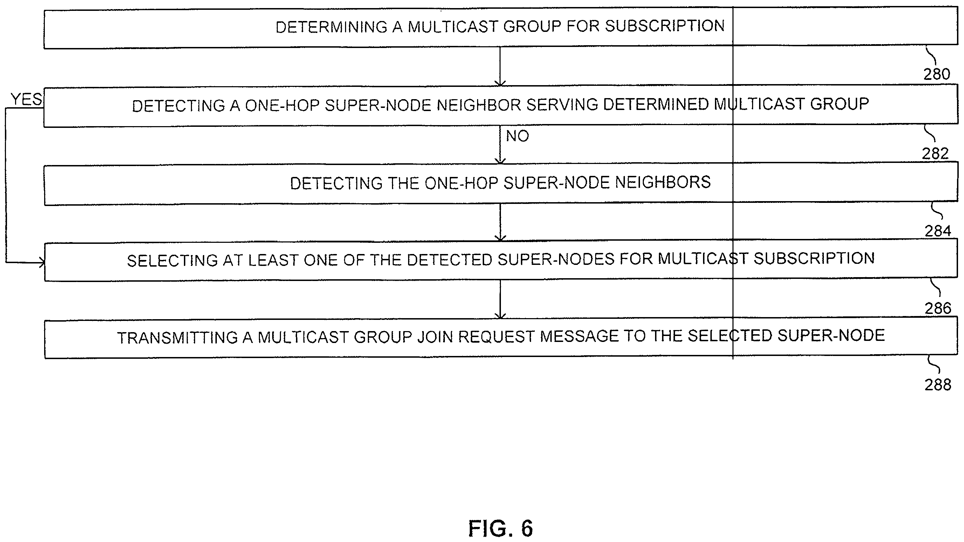

Reference is now made to Figure 6, which is a schematic illustration of a method for prioritizing and selecting a super-node when an ordinary-node attempts to subscribe to a multicast group, operative in accordance with a further embodiment of the disclosed technique. In procedure 280, a multicast group is determined for subscription. A host coupled with an ordinary-node may require multicast services. When an ordinary-node receives such a request, that ordinary-node determines which multicast group that ordinary-node should subscribe with. With reference to Figure 3, local multicast processor 166 determines a multicast group for subscribing.

In procedure 282, one-hop super-node neighbors, subscribed to the determined multicast group are detected. A super-node is subscribed to a multicast group when that super-node provides multicast services to hosts coupled therewith. A super-node is also a subscriber to a multicast group when that super-node provides multicast services to one-hop ordinary-node neighbors. Therefore, when an ordinary-node receives a request to receive multicast services from a host coupled therewith, that ordinary-node detects the one-hop super-node neighbors subscribed to that same multicast group. The ordinary-node detects the one-hop super-node neighbors, subscribed to the determined multicast group, according to the local multicast registration table stored therein. When a one-hop super-node neighbor, subscribed to the determined multicast group, is detected, then, the method proceeds to procedure 286. When a one-hop super-node neighbor, subscribed to the determined multicast group, is not detected, then, the method proceeds to procedure 284. With reference to Figure 3, local multicast processor 166 detects the one-hop super-node neighbors that are subscribed to the determined multicast group.

In procedure 284, the one-hop super-node neighbors of the ordinary-node are detected. These one-hop super-node neighbors are not subscribed, and do not serve the determined multicast group. With reference to Figure 3, multicast processor 166 detects one-hop super-node neighbors.

In procedure 286, at least one of the detected one-hop super-node neighbors is selected for multicast subscription. With reference to Figure 3, multicast processor 166 selects at least one-hop super-node neighbor for multicast subscription.

In procedure 288, a multicast group subscription request message is transmitted to the selected one-hop super-node neighbor. With reference to Figure 3, local multicast processor 166 transmits via transmitter 174 a multicast group subscription request message to the selected one-hop super-node neighbor.

According to the disclosed technique, super-nodes flood the backbone of the network with network topology update messages and with messages including updates of the backbone multicast registration table. Furthermore, each ordinary-node is capable of flooding the network with a packet (i.e., that packet is directed to be received by every node in the network). However, when a message or a packet is flood through the network, each node may receive that message or packet a multiplicity of times (i.e., there is a redundancy of flood packet or flood message transmission). Therefore, in order to reduce that redundancy and reduce the bandwidth required to transmit flood messages, each flood packet includes a trailer list. This trailer list includes entries of the identification representations of at least some of the super-nodes that that flood message was sent to. The trailer list is managed as a First-In-First-Out (FIFO) buffer (i.e., a buffer wherein the entry which was the first to enter the buffer, is also the first to exit, when the buffer overspills). A super-node, receiving a flood packet, produces an updated trailer list, prior to forwarding that flood packet,

Reference is now made to Figures 7A, 7B and 7C which are schematic illustrations of an exemplary network backbone, generally referenced 320, in accordance with another embodiment of the disclosed technique. Network backbone 320 includes super-nodes 322, 324, 326, 328, 330, 332, 334 and 336. Bold line 338, represents the dedicated backbone routing link between super-node 322 and super-node 324. Bold line 340, represents the dedicated backbone routing link between super-node 322 and super-node 326. Bold line 342, represents the dedicated backbone routing link between super-node 322 and super-node 328. Bold line 34, represents the dedicated backbone routing link between super-node 324 and super-node 330. Bold line 346, represents the dedicated backbone routing link between super-node 324 and super-node 326. Bold line 3435, represents the dedicated backbone routing link between super-node 326 and super-node 332. Bold line 350, represents the dedicated backbone routing link between super-node 326 and super-node 328. Bold line 352, represents the dedicated backbone routing link between super-node 328 and super-node 334. Bold line 354, represents the dedicated backbone routing link between super-node 330 and super-node 332. Bold line 356, represents the dedicated backbone routing link between super-node 332 and super-node 334. Bold line 358, represents the dedicated backbone routing link between super-node 330 and super-node 336. Bold line 360, represents the dedicated backbone routing link between super-node 332 and super-node 336. Bold line 362, represents the dedicated backbone routing link between super-node 334 and super-node 336. The arrowed lines 364, 366 and 368, indicate that a flood message was received from super-node 322 to super-nodes 324, 326 and 328.

The bracketed numbers, adjacent to each arrowed line, represent an exemplary trailer lest. The trailer list, in exemplary network backbone 320, consists of two super-nodes the flood message is forwarded to. Super-node 322, forwards the message to super-nodes 324, 326 and 328, and appends another trailer list indicating that the message was forwarded to super-nodes 324 and 326.

Referring to Figure 7B, in network 320, super-nodes 324, 325 and 328 received the flood message. Super-nodes 324, 326 and 328, forward the flood message to the respective one-hop super-node neighbors of the super-nodes, excluding the one-hop super-node neighbor included in the trailer list. Super-node 324 forwards the flood message to super-node 330, as indicated by arrowed line 370. Super-node 326 forwards the flood message to super-node 332 as indicated by arrowed line 372, and to super-node 328 as indicated by arrowed line 374. Super-node 328 forwards flood message to super-node 334, as indicated by arrowed line 376. However, super-node 324 does not forward the message to super-node 326, since according to the trailer list appended to the flood message super-node 326 received the flood message from super-node 322.

Referring Figure 7C, in network 320, super-nodes 330, 332 and 334 received the flood message. Super-node 330 forwards the message to super-node 332 and super-node 336, as indicated by arrowed lines 378 and 382 respectively. Super-node 330, appends a trailer list, indicating that the flood message was sent to super-node 332 and super-node 336. Consequently, super-node 332 does not forward the message to super-node 336. However, super-node 332 does forward the flood message to super-node 334, as indicated by arrowed line 380. Super-node 334 forwards the message to super-node 336, as indicated by arrowed line 384, since according to the trailer list, received by super-node 334, super-node 336 did not receive the flood message.

In the network according to the disclosed technique, each super-node is capable of flooding the backbone of the network with a flood message (i.e., that message is directed to be received by every node in the network). Each flood message includes a trailer list. Additionally, the flood message includes the original source node of the message (i.e., the first node that sent the message) and message identification (e.g., message serial number).

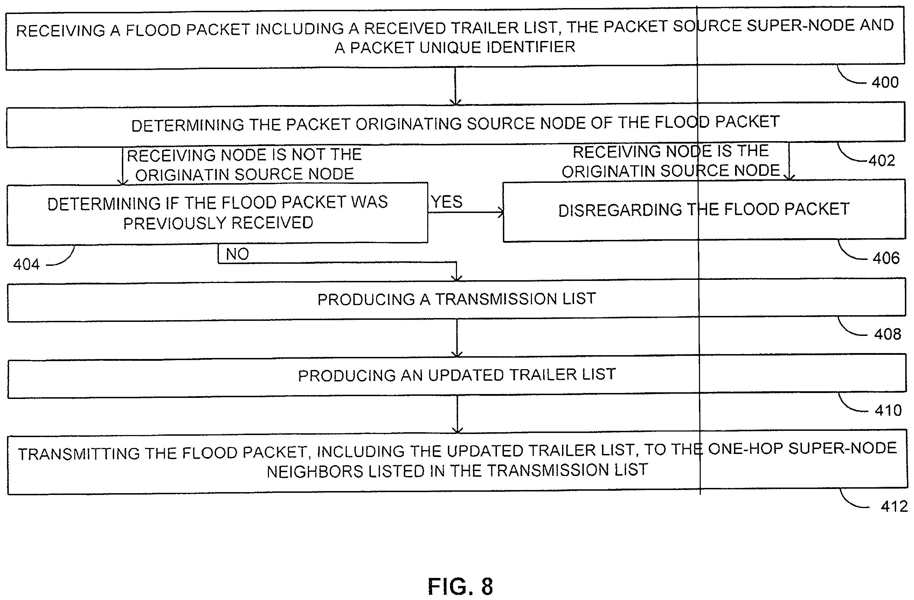

Reference is now made to Figure 8, which is a schematic illustration of a method for determining the next hops of a flood packet in the backbone of the network, according to a further embodiment of the disclosed technique. In Figure 8, the term packet is used. It is noted that the method in Figure 8 refers to messages as well. In procedure 400, a flood packet, including a received trailer list, the packet source super-node and a packet identification is received by a super-node. The received trailer list includes at least some of the super-nodes that flood packet was sent to. With reference to Figure 3, backbone flooding processor 162 receives via receiver 172 a flood packet.

In procedure 402, the originating source node of the flood packet is determined. When the receiving super-node is the flood packet originating source node, then the method proceeds to procedure 334. If the receiving super-node is not the originating source node, then the method proceeds to procedure 404. With reference to Figure 3, backbone flooding processor 162 determines the flood packet source node.

In procedure 404, previous reception of the flood packet is determined. Previous reception of the packet is determined according to the packet unique identifier. When the packet unique identifier is stored in the database of the receiving super-node, then the packet was previously received. If the packet unique identifier is not stored in the database of the receiving super-node, then the packet was not previously received. It is noted that packet unique identifiers are deleted form the database after a determined time period, thus enabling the reuse of the packet unique identifier. When the flood packet was previously received, then, the method proceeds to procedure 406. When, the flood packet was not previously received, then, the method proceeds to procedure 408. With reference to Figure 6, backbone flooding processor 162 determines if the packet was previously received.

In procedure 406, the flood packet is disregarded. With reference to Figure 3 backbone flooding processor 162 disregards the received flood packet.

In procedure 408, a transmission list is produced. This transmission list includes entries of the identification representation of only those one-hop super-node neighbors, not listed in the received trailer list. This transmission list further includes those one-hop super-node neighbors, to which the super-node intends to transmit the packet. With reference to Figure 6, backbone flooding processor 162 produces a transmission list.

In procedure 420, an updated trailer list is produced. As mentioned above, the trailer list may be managed as FIFO buffer. Accordingly, the transmission list entries are introduced to the trailer list and the most ancient trailer list entries are deleted from the trailer list (i.e., the number of deleted entries equals the number of introduced entries). With reference to Figure 6, local topology processor 170produces an updated trailer list.

In procedure 420, the flood packet, including the updated trailer list, is transmitted to the one-hop super-node neighbors listed in the transmission list. With reference to Figure 6, backbone flooding processor 162 transmits via transmitter 174 the flood packet including the updated trailer list, to one-hop super-node neighbors listed in the transmission list.

It will be appreciated by persons skilled in the art that the disclosed technique is not limited to what has been particularly shown and described hereinabove. Rather the scope of the disclosed technique is defined only by the claims, which follow.

## Claims

1. A method for a node in a wireless adhoc network (100) comprising the procedures of:
subscribing by said node to at least one multicast group, said multicast group including at least a portion of a plurality of nodes in the wireless ad hoc network, each said nodes being designated with a dynamically determined role, a plurality of said nodes being designated with the role of a super-node (102,106,110,112,116,118) and the remaining of said nodes being designated with the role of ordinary-nodes (104,108,114,120,122), said super-node designated nodes forming a routing backbone of said network, each of said nodes storing multicast information, each ordinary-node attempts to have at least a minimal one-hop local super-node number of one-hop super-node neighbors and each super-node attempts to have at least a minimal one-hop backbone super-node number of one-hop super-node neighbors, at least some of said ordinary-nodes have at least two one-hop super-nodes neighbors;
updating said stored multicast information; and
synchronizing respective stored multicast information among said super-nodes by producing at least one backbone multicast update message and flooding said backbone with said backbone multicast update message when a node is designated with said role of super-node, said backbone multicast update message at least including changes that occurred to said stored multicast information, said flooding including determining by a super-node designated node the next hops of a flood packet in said backbone of said network, said flood packet at least including said backbone multicast update message,
wherein said determining by a super-node designated node the next hops of the flood packet in said backbone of said network includes the sub-procedures of:
receiving a trailer list, said received trailer list including entries of identification representations of a portion of super-nodes that received said flood packet;
producing a transmission list, said transmission list including one-hop super-node neighbors of said receiving super-node not listed in said received trailer list, and to which said receiving super-node intends to transmit said flood packet;
producing an updated trailer list; and
transmitting said flood packet, including said updated trailer list, to said one-hop super-node neighbors listed in said transmission list.

2. The method according to claim 1, wherein said procedure of updating said stored multicast information when said node is designated with said role of super-node includes the sub-procedures of:
detecting an event in a one-hop neighborhood of said super-node designated node, said super-node designated node being registered with said at least one multicast-group, said event being either an ordinary-node designated node joining said one-hop neighborhood, or an ordinary-node designated node leaving said one-hop neighborhood, or a subscriber subscribing with said super-node designated node to one of said at least one multicast group, or a subscriber un-subscribing with said super-node designated node to either said or another one of said at least one multicast group;
transmitting a local multicast update message to said one-hop ordinary-node when said event is detected as an ordinary-node designated node joining said one-hop neighborhood or said super-node designated node;
repeating from said procedure of detecting an event;
determining if said subscribing subscriber is the first subscriber with said super-node designated node to one of said at least one multicast group, when said event is detected as said subscriber subscribing with said at least one multicast group;
repeating from said procedure of detecting an event when said subscriber is not said first subscriber;
determining if said un-subscribing subscriber is the last remaining subscriber to said multicast group, either when said event is detected as a one-hop ordinary-node neighbor leaving said one-hop neighborhood of said super-node designated node, or when said event is detected as said subscriber un-subscribing to either said or another one of said at least one multicast group;
repeating from said procedure of detecting an event when said subscriber is not said last subscriber;
updating a backbone multicast registration table when said subscriber is either the last subscriber or the first subscriber, with said super-node designated node, to said multicast group; and
repeating from said procedure of detecting an event.

3. The method according to claim 2, wherein said local multicast update message includes a list of all of said at least one multicast group in said network, and which of said at least one multicast group said super-node designated node serves.

4. The method according to claim 1, wherein said backbone multicast update message further includes multicast groups that said super-node serves.

5. The method according to claim 3, wherein said backbone multicast update message further includes new ones of said at least one multicast group that said super-node serves.

6. The method according to claim 2, wherein said subscriber is an ordinary-node designated node.

7. The method according to claim 2, wherein said subscriber is a host coupled with said super-node designated node.

8. The method according to claims 1, wherein, when said node is designated with said role of ordinary-node, said procedure of subscribing to a multicast group further includes the sub-procedures of:
determining a multicast group for subscription;
detecting a one-hop super-node designated node neighbor, of said ordinary-node, serving said determined multicast group;
detecting one-hop super-node designated node neighbors, of said ordinary-node, when a one-hop super-node designated node neighbor, serving said determined multicast group, is not detected;
selecting at least one of said detected one-hop super-node designated node neighbors for multicast subscription; and
transmitting a multicast subscription request message to said selected at least one one-hop super-node designated node neighbor after said procedure of selecting.

9. The method according to claim 1, wherein said flood packet further includes the originating source super-node designated node of said flood packet and an identifier of said flood packet.

10. The method according to claim 9, further comprising the procedures of:
determining said originating source super-node of said flood packet;
determining if said flood packet was previously received; and
disregarding said flood packet when said receiving super-node is the originating source super-node of said flood packet, or when said receiving super-node previously received said flood packet.

11. The method according to claim 1, wherein said transmission list excludes said receiving super-node.

12. The method according to claim 9, wherein said super-node determines that said flood packet was previously received according to said identifier of said flood packet.

## Patentansprüche

1. Verfahren für einen Knoten eines drahtlosen Ad-hoc-Netzwerks (100), umfassend die Prozeduren:
Teilnehmen an mindestens einer Multicast-Gruppe durch den Knoten, wobei die Multicast-Gruppe mindestens einen Teil einer Vielzahl von Knoten des drahtlosen Ad-hoc-Netzwerks enthält, wobei jeder der Knoten mit einer dynamisch festgelegten Rolle bezeichnet ist,
wobei eine Vielzahl der Knoten mit der Rolle als Superknoten (102, 106, 110, 112, 116, 118) bezeichnet ist und die übrigen der Knoten mit der Rolle als gewöhnliche Knoten (104, 108, 114, 120, 122) bezeichnet sind, wobei die als Superknoten bezeichneten Knoten ein Routing-Backbone des Netzwerks bilden, wobei jeder der Knoten Multicast-Informationen speichert, wobei jeder gewöhnliche Knoten versucht,
mindestens eine minimale Anzahl lokaler Einzelsprung-Superknoten als Einzelsprung-Superknoten-Nachbarn zu haben, und wobei jeder Superknoten versucht, mindestens eine minimale Anzahl Einzelsprung-Backbone-Superknoten als Einzelsprung-Superknoten-Nachbarn zu haben, wobei einige der gewöhnlichen Knoten mindestens zwei Einzelsprung-Superknoten-Nachbarn haben;
Aktualisieren der gespeicherten Multicast-Informationen; und
Synchronisieren jeweiliger gespeicherter Multicast-Informationen zwischen den Superknoten durch Erzeugen mindestens einer Backbone-Multicast-Aktualisierungsmeldung und Fluten des Backbones mit der Backbone-Multicast-Aktualisierungsmeldung, wenn ein Knoten mit der Rolle als Superknoten bezeichnet wird, wobei die Backbone-Multicast-Aktualisierungsmeldung mindestens an den gespeicherten Multicast-Informationen aufgetretene Änderungen enthält, wobei das Fluten das Bestimmen des nächsten Sprungs eines Flood-Pakets im Backbone des Netzwerks durch einen als Superknoten bezeichneten Knoten enthält, wobei das Flood-Paket mindestens die Backbone-Multicast-Aktualisierungsmeldung enthält,
wobei das Bestimmen des nächsten Sprungs des Flood-Pakets im Backbone des Netzwerks durch einen als Superknoten bezeichneten Knoten die folgenden Unterprozeduren enthält:
Empfangen einer Trailer-Liste, wobei die empfangene Trailer-Liste Einträge von Identifizierungsdarstellungen von einem Teil der Superknoten, die das Flood-Paket erhalten haben, enthält;
Erzeugen einer Sendeliste, wobei die Sendeliste Einzelsprung-Superknoten-Nachbarn des empfangenden Superknotens enthält, die nicht in der empfangenen Trailer-Liste gelistet sind, und an die der empfangende Superknoten das Flood-Paket zu senden beabsichtigt;
Erzeugen einer aktualisierten Trailer-Liste; und
Übertragen des Flood-Pakets, einschließlich der aktualisierten Trailer-Liste, an die in der Sendeliste gelisteten Einzelsprung-Superknoten-Nachbarn.

2. Verfahren nach Anspruch 1, wobei die Prozedur des Aktualisierens der gespeicherten Multicast-Informationen, wenn der Knoten mit der Rolle als Superknoten bezeichnet ist, die folgenden Unterprozeduren enthält:
Erkennen eines Ereignisses in einer Einzelsprung-Nachbarschaft des als Superknoten bezeichneten Knotens, wobei der als Superknoten bezeichnete Knoten bei der mindestens einen Multicast-Gruppe registriert ist, wobei das Ereignis entweder ein Beitreten eines als gewöhnlicher Knoten bezeichneten Knotens zu der Einzelsprung-Nachbarschaft oder ein Verlassen eines als gewöhnlicher Knoten bezeichneten Knotens der Einzelsprung-Nachbarschaft oder ein Teilnehmen an einer der mindestens einen Multicast-Gruppe durch einen Teilnehmer mit dem als Superknoten bezeichneten Knoten oder ein Abmelden von entweder dieser Multicast-Gruppe oder einer anderen der mindestens einen Multicast-Gruppe durch einen Teilnehmer mit dem als Superknoten bezeichneten Knoten ist;
Senden einer lokalen Multicast-Aktualisierungsmeldung an den gewöhnlichen Einzelsprung-Knoten, wenn das Ereignis als ein Beitreten eines als gewöhnlicher Knoten bezeichneten Knotens zu der Einzelsprung-Nachbarschaft oder des als Superknoten bezeichneten Knotens erkannt wird;
Wiederholen der Prozedur des Erkennens eines Ereignisses;
Bestimmen, ob der teilnehmende Teilnehmer der erste Teilnehmer mit dem als Superknoten bezeichneten Knoten an einer der mindestens einen Multicast-Gruppe ist, wenn das Ereignis als Teilnehmen des Teilnehmers an der mindestens einen Multicast-Gruppe erkannt wird;
Wiederholen der Prozedur des Erkennens eines Ereignisses, wenn der Teilnehmer nicht der erste Teilnehmer ist;
Bestimmen, ob der verlassende Teilnehmer der letzte übrig gebliebene Teilnehmer an der Multicast-Gruppe ist, entweder, wenn das Ereignis als ein Verlassen der Einzelsprung-Nachbarschaft des als Superknoten bezeichneten Knotens von einem gewöhnlichen Einzelsprung-Knoten-Nachbar erkannt wird, oder, wenn das Ereignis als Abmelden von entweder dieser Multicast-Gruppe oder einer anderen der mindestens einen Multicast-Gruppe durch den Teilnehmer erkannt wird;
Wiederholen der Prozedur des Erkennens eines Ereignisses, wenn der Teilnehmer nicht der letzte Teilnehmer ist;
Aktualisieren einer Backbone-Multicast-Registrierungstabelle mit dem als Superknoten bezeichneten Knoten, wenn der Teilnehmer entweder der letzte Teilnehmer oder der erste Teilnehmer der Multicast-Gruppe ist; und
Wiederholen der Prozedur des Erkennens eines Ereignisses.

3. Verfahren nach Anspruch 2, wobei die lokale Multicast-Aktualisierungsmeldung eine Liste mit allen der mindestens einen Multicast-Gruppe im Netzwerk und derjenigen der mindestens einen Multicast-Gruppe, die der als Superknoten bezeichnete Knoten bedient, enthält.

4. Verfahren nach Anspruch 1, wobei die Backbone-Multicast-Aktualisierungsmeldung weiterhin Multicast-Gruppen enthält, die der Superknoten bedient.

5. Verfahren nach Anspruch 3, wobei die Backbone-Multicast-Aktualisierungsmeldung weiterhin neue der mindestens einen Multicast-Gruppe enthält, die der Superknoten bedient.

6. Verfahren nach Anspruch 2, wobei der Teilnehmer ein als gewöhnlicher Knoten bezeichneter Knoten ist.

7. Verfahren nach Anspruch 2, wobei der Teilnehmer ein Host ist, der mit dem als Superknoten bezeichneten Knoten gekoppelt ist.

8. Verfahren nach Anspruch 1, wobei die Prozedur des Teilnehmens an einer Multicast-Gruppe weiterhin folgende Unterprozeduren enthält, wenn der Knoten mit der Rolle als gewöhnlicher Knoten bezeichnet ist:
Bestimmen einer Multicast-Gruppe für eine Teilnahme;
Erkennen eines als Einzelsprung-Superknoten bezeichneten Knotennachbarn des gewöhnlichen Knotens, der die bestimmte Multicast-Gruppe bedient;
Erkennen von als Einzelsprung-Superknoten bezeichneten Knotennachbarn des gewöhnlichen Knotens, wenn ein als Einzelsprung-Superknoten bezeichneter Knotennachbar, der die bestimmte Multicast-Gruppe bedient, nicht erkannt wird;
Auswählen mindestens eines der erkannten als Einzelsprung-Superknoten bezeichneten Knotennachbarn für eine Multicast-Teilnahme; und
Senden einer Multicast-Teilnahme-Anforderungsmeldung an den ausgewählten mindestens einen als Einzelsprung-Superknoten bezeichneten Knotennachbarn nach der Auswahlprozedur.

9. Verfahren nach Anspruch 1, wobei das Flood-Paket weiterhin den ursprünglichen als Quell-Superknoten bezeichneten Knoten des Flood-Pakets und eine Kennung des Flood-Pakets enthält.

10. Verfahren nach Anspruch 9, ferner umfassend die folgenden Prozeduren:
Bestimmen des ursprünglichen Quell-Superknotens des Flood-Pakets;
Bestimmen, ob das Flood-Paket bereits empfangen wurde; und
Ignorieren des Flood-Pakets, wenn der empfangende Superknoten der ursprüngliche Quell-Superknoten des Flood-Pakets ist oder wenn der empfangende Superknoten vorher bereits das Flood-Paket empfangen hat.

11. Verfahren nach Anspruch 1, wobei die Sendeliste den empfangenden Superknoten ausschließt.

12. Verfahren nach Anspruch 9, wobei der Superknoten den vorherigen Empfang des Flood-Pakets anhand der Kennung des Flood-Pakets bestimmt.

## Revendications

1. Procédé pour un noeud dans un système ad hoc sans fil (100) comprenant les procédures de:
s'abonner par ledit noeud à au moins un groupe de multidiffusion, ledit groupe de multidiffusion incluant au moins une portion d'une pluralité de noeuds dans le réseau ad hoc sans fil, chacun desdits noeuds étant désigné avec un rôle déterminé dynamiquement, une pluralités desdits noeuds étant désigné avec le rôle d'un super noeud (102,106,110,112,116,118) et le restant desdits noeuds étant désigné avec le rôle de noeuds-ordinaires (104,108,114,120,122), lesdits noeuds désignés comme super-noeuds formant une dorsale de routage dudit réseau, chacun desdits nooeds stockant des informations de multidiffusion, chaque noeud ordinaire tente d'avoir au moins un nombre de super-noeuds locaux à-un-saut minimal des super-noeuds voisins à-un-saut et chaque super-noeud tente d'avoir au moins un nombre de super-noeuds de dorsale à-un-saut minimal des super-noeuds voisins, au moins certains desdits noeuds-ordinaires ont au moins deux super-noeuds voisins à-un-saut;
mettre à jour lesdites informations de multidiffusions stockées; et
synchroniser les informations de multidiffusion stockées respective parmi lesdits super-noeuds en produisant au moins un message de mise à jour de multidiffusion de dorsale et inonder ladite dorsale avec ledit message de mise à jour de multidiffusion de dorsale lorsqu'un noeud est désigné avec ledit rôle de super-noeud, ledit message de mise à jour de multidiffusion de dorsale incluant au moins des changements qui se sont produits sur lesdites informations de multidiffusion stockées, ledit inondation incluant la détermination par un noeud désigné comme un super-noeud les suivants sauts d'un paquet d'inondation dans ladite dorsale dudit réseau,
ledit paquet d'inondation incluant au moins ledit message de mise à jour de multidiffusion de dorsale,
dans lequel ladite détermination par un noeud désigné comme un super-noeud des sauts suivants du paquet d'inondation dans ladite dorsale dudit réseau inclut les sous-procédures de:
recevoir une liste de traîne, ladite liste de traîne reçue incluant des entrées de représentations d'identification d'une portion des super-noeuds qui ont reçu ledit paquet d'inondation ;
produire une liste de transmission, ladite liste de transmission incluant des super-noeuds voisins à-un-saut dudit super-noeud de réception non listé dans ladite liste de traîne reçue et auxquels ledit super-noeud de réception à l'intention de transmettre ledit paquet d'inondation ;
produire une liste de traîne mise à jour ; et
transmettre ledit paquet d'inondation, incluant ladite liste de traîne mise à jour, auxdits super-noeuds voisins à-un-saut listés dans ladite liste de transmission.

2. Procédé selon la revendication 1, dans lequel ladite procédure de mise à jour de lesdites informations de multidiffusion stockées lorsque ledit noeud est désigné avec ledit rôle de super-noeud inclut les sous procédures de:
détecter un événement dans un voisinage dudit noeud désigné comme super-noeud, ledit noeud désigné comme super-noeud étant enregistré avec ledit au moins un groupe de multidiffusion, ledit événement étant soit un noeud désigné comme noeud-ordinaire rejoignant ledit voisinage à-un-saut, ou soit un noeud désigné comme noeud-ordinaire quittant ledit voisinage à-un-saut, ou soit un abonné s'abonnant avec ledit noeud désigné comme un super-noeud dans un dudit au moins un groupe de multidiffusion, ou soit un abonné se désabonnant avec ledit noeud désigné comme un super-noeud dudit ou d'un autre dudit au moins un groupe de multidiffusion ;
transmettre un message de mise à jour de multidiffusion locale audit noeud-ordinaire à-un-saut lorsque ledit événement est détecté comme un noeud désigné comme un noeud-ordinaire rejoignant ledit voisinage à-un-saut ou ledit noeud désigné comme un super-noeud ;
répéter à partir de ladite procédure de détection d'un événement ;
déterminer si ledit abonné qui s'abonne est le premier abonné avec ledit noeud désigné comme un super-noeud dans un dudit au moins un groupe de multidiffusion, lorsque ledit événement est détecté comme ledit abonné s'abonnant dans ledit au moins un groupe de multidiffusion ;
répéter à partir de ladite procédure de détection d'un événement lorsque ledit abonné n'est pas ledit premier abonné ;
déterminer si ledit abonné qui se désabonne est le dernier abonné restant dans ledit groupe de multidiffusion, soit lorsque ledit événement est détecté comme un noeud-ordinaire voisin à-un-saut quittant ledit voisinage à-un-saut dudit noeud désigné comme un super-noeud, ou soit lorsque ledit événement est détecté comme ledit abonné se désabonnant dudit ou d'un autre dudit au moins un groupe de multidiffusion ;
répéter à partir de ladite procédure de détection d'un événement lorsque ledit abonné n'est pas ledit dernier abonné ;
mettre à jour une table d'enregistrement de multidiffusion de dorsale lorsque ledit abonné est soit le dernier abonné ou soit le premier abonné, avec ledit noeud désigné comme un super-noeud, audit groupe de multidiffusion ; et
répéter à partir de ladite procédure de détection d'un événement.

3. Procédé selon la revendication 2, dans lequel ledit message de mise à jour de multidiffusion local inclut une liste de tous dudit au moins un groupe de multidiffusion dans ledit réseau, et lequel dudit au moins un groupe de multidiffusion ledit noeud désigné comme un super-noeud serve.

4. Procédé selon la revendication 1, dans lequel le message de mise à jour de multidiffusion de dorsale inclut en outre des groupes de multidiffusion que ledit super-noeud serve.

5. Procédé selon la revendication 3, dans lequel ledit message de mise à jour de multidiffusion de dorsale inclut en outre des nouveaux groupes dudit au moins un groupe de multidiffusion que ledit super-noeud serve.

6. Procédé selon la revendication 2, dans lequel ledit abonné est un noeud désigné comme un noeud-ordinaire.

7. Procédé selon la revendication 2, dans lequel ledit abonné est un hôte couplé avec ledit noeud désigné comme un super-noeud.

8. Procédé selon la revendication 1, dans lequel, lorsque ledit noeud est désigné avec ledit rôle de noeud-ordinaire, ladite procédure d'abonnement à un groupe de multidiffusion inclut en outre des sous-procédures de:
déterminer un groupe de multidiffusion pour abonnement ;
détecter un noeud voisin désigné comme un super-noeud à-un-saut, dudit noeud-ordinaire, servant ledit groupe de multidiffusion déterminé ;
détecter des noeuds voisins désignés comme super-noeud à-un-saut, dudit noeud-ordinaire, lorsqu'un noeud voisin désigné comme un super-noeud à-un-saut, servant ledit groupe de multidiffusion déterminé, n'est pas détecté ;
sélectionner au moins un desdits noeuds voisins désignés comme super-noeud à-un-saut détecter pour abonnement de multidiffusion ; et
transmettre un message de demande d'abonnement de multidiffusion audit au moins un noeud voisin sélectionné désigné comme super-noeud à-un-saut après ladite procédure de sélection.

9. Procédé selon la revendication 1, dans lequel ledit paquet d'inondation inclut en outre le source d'origine noeud désigné comme super-noeud dudit paquet d'inondation et un identifiant dudit paquet d'inondation.

10. Procédé selon la revendication 9, comprenant en outre les procédures de:
déterminer ledit source d'origine super-noeud dudit paquet d'inondation ;
déterminer si ledit paquet d'inondation a été précédemment reçu ; et
ne pas tenir compte dudit paquet d'inondation lorsque ledit super-noeud de réception est le source d'origine super-noeud dudit paquet d'inondation,
ou lorsque ledit super-noeud de réception a précédemment reçu ledit paquet d'inondation.,

11. Procédé selon la revendication 1, dans lequel ladite liste de transmission exclut ledit super-noeud de réception.

12. Procédé selon la revendication 9, dans lequel ledit super-noeud détermine que ledit paquet d'inondation a été précédemment reçu selon ledit identifiant dudit paquet d'inondation.
